(19) Europäisches Patentamt
European Patent Office
Office européen des brevets

(11) Veröffentlichungsnummer: **0 334 155**
**A1**

# (12) EUROPÄISCHE PATENTANMELDUNG

(21) Anmeldenummer: **89104408.3**

(22) Anmeldetag: **13.03.89**

(51) Int. Cl.[4]: **C08F 220/18 , C08F 220/34 , C08F 220/36 , C10L 1/22**

(30) Priorität: **21.03.88 DE 3809418**

(43) Veröffentlichungstag der Anmeldung: **27.09.89 Patentblatt 89/39**

(84) Benannte Vertragsstaaten: **DE FR GB IT NL**

(71) Anmelder: **Henkel Kommanditgesellschaft auf Aktien**
**Postfach 1100 Henkelstrasse 67**
**D-4000 Düsseldorf 1(DE)**

(72) Erfinder: **Wahle, Bernd, Dr.**
**Am Heidt 24**
**D-4044 Kaarst 2(DE)**
Erfinder: **Herold, Claus-Peter, Dr.**
**Ostpreussenstrasse 26**
**D-4020 Mettmann(DE)**
Erfinder: **Zöllner, Wolfgang**
**Ziegeleiweg 49**
**D-4000 Düsseldorf 13(DE)**
Erfinder: **Schieferstein, Ludwig, Dr.**
**Am Hang 15**
**D-4030 Ratingen(DE)**
Erfinder: **Oberkobusch, Doris, Dr.**
**Seidenweg 43**
**D-4000 Düsseldorf 13(DE)**

## (54) Copolymere von langkettigen Alkylacrylaten mit N-haltigen Olefinen, Verfahren zu ihrer Herstellung und ihre Verwendung als Fliessverbesserer für Rohöle.

(57) Copolymere von langkettigen Alkylacrylaten der Formel
$CH_2=CR^1\text{-}CO\text{-}OR^2$ (I)
in der $R^1$ ein Wasserstoffatom oder eine Methylgruppe und $R^2$ der Rest eines Fettalkohols mit 16 bis 34 Kohlenstoffatomen ist, mit N-haltigen, Acrylat- bzw. Methacrylatfunktionen enthaltenden Olefinen lassen sich als Fließverbesserer für Rohöle einsetzen.

EP 0 334 155 A1

Xerox Copy Centre

# Copolymere von langkettigen Alkylacrylaten mit N-haltigen Olefinen, Verfahren zu ihrer Herstellung und ihre Verwendung als Fließverbesserer für Rohöle

Rohöle können in Abhängigkeit vom jeweiligen Ursprung erhebliche Mengen an Paraffinen enthalten. Beim Abkühlen unter eine bestimmte Temperatur ("Trübungspunkt" oder "Cloud Point") kristallisiert das Paraffin allmählich aus dem Öl aus und bildet ein dreidimensionales Netzwerk aus Schuppen und/oder Nadeln, das mit Öl gefüllt ist. Eine solche Struktur verleiht dem Rohöl nachteilige Eigenschaften im Hinblick auf Fließfähigkeit und Handhabbarkeit.

Im Rohöl auskristallisierendes Paraffin bewirkt, daß das Öl kaum oder gar nicht mehr fließt, nicht oder nur mit großem Energieaufwand zu pumpen ist und in Rohrleitungen, Pipelines, Lagerbehältern und Schiffstanks Ablagerungen bildet, die zu erheblichen Produktions- und Kapazitätsverlusten führen.

Die in ölführenden Schichten befindlichen Rohöle haben eine mit der Tiefe variierende Temperatur. In den tieferen Schichten, aus denen das Öl gefördert wird, herrschen höhere Temperaturen, bei denen das Paraffin noch flüssig und im Öl gelöst ist. Werden einem paraffinhaltigen Rohöl in diesem Zustand Kristallisationsinhibitoren zugesetzt, wird einerseits eine Stockpunkterniedrigung des Rohöls bewirkt, andererseits werden die Kristallstrukturen des ausgeschiedenen Paraffins unter Verbesserung der Fließeigenschaften des Rohöls verändert.

Als Maß für die Wirkung eines Fließverbesserers ("Flow Improver") wird der Stockpunkt oder das Absenken des Stockpunktes im Vergleich zum Rohöl ohne Fließverbesserer in °C angegeben. In diesem Sinne spricht man bei Fließverbesserern auch von Stockpunkterniedrigern ("Pour Point Depressants, PPDs").

In der Literatur wird eine Vielzahl von Verbindungen mit Kristallisationsinhibitorwirkung beschrieben, vgl. DE-OS 2 926 474, 2 330 232, 3 237 308, 3 226 252, 3 031 900, 2 210 431; EP-OS 61 894; US-PS 4 284 414, 3 957 659. Meist handelt es sich um Copolymere von $C_{16}$-$C_{24}$(Meth-)Acrylaten mit kürzerkettigen (Meth-)Acrylaten, Aminoalkyl-(Meth-)acrylaten sowie diversen Olefinen mit oder ohne polare Gruppen. Charakteristischerweise stellen die $C_{16}$-$C_{24}$-Alkohole die typischen Schnitte der Produkte aus nativen oder petrochemischen Rohstoffen dar.

Eine Sonderstellung nimmt ein handelsübliches Produkt ein, das im folgenden zu Vergleichszwecken benutzt und daher als "Vergleichsprodukt" bezeichnet wird und das sich bei einer Vielzahl verschiedener Rohöle als Fließverbesserer einsetzen läßt. Die genaue Struktur dieses Produktes ist nicht bekannt; vermutlich handelt es sich um ein in den DE-A 22 10 431 und 22 63 011 beschriebenes Copolymeres aus

a) einem $C_{16}$-$C_{24}$-Acrylat und
b) 4-Vinylpyridin

Die beiden Comonomeren haben sehr unterschiedliche Copolymerisationsparameter (Acrylsäureoctalester : $v_1$ ca. 0,1; 4-Vinylpyridin : $v_2$ ca. 1,6). Sie sind deshalb schlecht copolymerisierbar und erfordern besondere Maßnahmen (z.B. programmierten Monomerenzulauf) bei den Produkten.

Die vorliegende Erfindung ist auf Copolymere von langkettigen Alkylacrylaten mit N-haltigen Olefinen gerichtet, die aufgrund der in beiden Monomeren vorhandenen Acrylatstruktur deutlich besser copolymerisierbar sind und sich insbesondere als Fließverbesserer für Rohöle eignen.

Die Copolymere der Erfindung sind erhältlich durch Copolymerisation von

a) Acrylaten der Formel I

$CH_2=CR^1$-CO-$OR^2$ (I)

in der $R^1$ ein Wasserstoffatom oder eine Methylgruppe und $OR^2$ der Rest eines Fettalkohols mit 16 bis 34 Kohlenstoffatomen bedeuten, mit

N-haltigen Olefinen

$b_1$) der Formel II

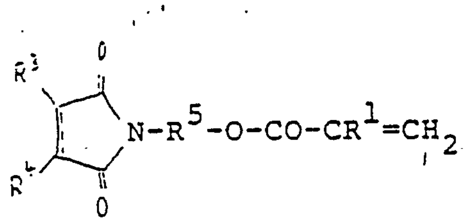

(II)

in der $R^3$ und/oder $R^4$ Wasserstoff oder $C_1$-$C_4$-Alkylgruppen sind oder zusammen einen gegebenenfalls aromatischen und gegebenenfalls mit $C_1$-$C_4$-Alkyl substituierten $C_5$- oder $C_6$-Ring bilden können,
$R^5$ eine geradkettige oder verzweigte Alkylengruppe mit 1 bis 12 Kohlenstoffatomen, die einen OH- oder $NH_2$-Substituenten oder das Strukturelement $-CH_2-CH_2-O-CH_2-CH_2-$ bzw. $-CH_2-CH_2-NH-CH_2-CH_2-$ (sofern 4 oder mehr als 4 Kohlenstoffatome vorhanden sind) oder auch eine cyclische $C_5$-oder $C_6$-Alkylgruppe aufweisen kann oder eine gegebenenfalls $C_1$-$C_4$-Alkylen-substituierte Phenylgruppe ist,
und $R^1$ wie oben definiert ist, wobei die Bindung

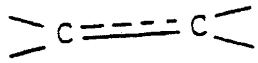

hydriert sein kann,
und/oder
$b_2$) der Formel III

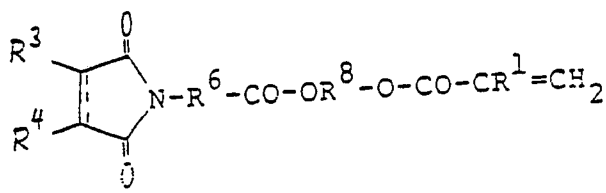
(III)

in der
$R^1$, $R^3$ und $R^4$ wie oben definiert sind,
$R^6$ einen Phenylenrest oder eine Alkylengruppe der Formel
$R^7$-CH-

in der $R^7$ ein Wasserstoffatom oder ein gegebenenfalls ver zweigter Alkylrest mit 1 bis 11 Kohlenstoffatomen ist, und
$R^8$ eine $C_2$-$C_{10}$-Alkylengruppe sowie die Bindung

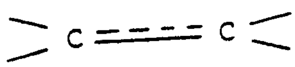

hydriert sein kann,
bedeuten,
und/oder
$b_3$) der Formel IV

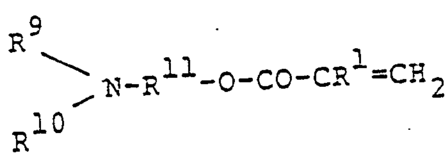
(IV)

in der
$R^1$ wie oben definiert ist, $R^9$ eine Phenyl- oder Benzylgruppe, $R^{10}$ eine $C_1$-$C_{16}$-Alkylgruppe und $R^{11}$ eine $C_2$-$C_6$-Alkylengruppe,
oder
$R^9$ und $R^{10}$ $C_1$-$C_{16}$-Alkylgruppen und $R^{11}$ eine Phenylengruppe bedeuten,
und/oder
$b_4$) der Formel V
$R^{12}-CO-NH-R^{13}-O-CO-CR^1=CH_2$ (V)
in der $R^{12}$ eine $C_7$-$C_{33}$-, insbesondere $C_{15}$-$C_{23}$-Alkylgruppe und $R^{13}$ eine $C_2$-$C_4$-Alkylengruppe bedeuten und $R^1$ wie oben definiert ist,

in Molverhältnissen von I zu II, III, IV bzw. V von 1 : 0,1 bis 1 : 10, in Anwesenheit von inerten organischen Lösemitteln und radikalischen Polymerisationsinitiatoren.

In der Copolymerisation können einzelne Olefine der Formeln II bis V oder auch Gemische dieser Olefine eingesetzt werden.

Die Acrylate der Formel I stellen Fettsäureester der Acrylsäure und Methacrylsäure dar; bevorzugt sind die Derivate der Acrylsäure.

Die Alkoholkomponente der Acrylate der Formel I wird von Alkoholen mit 16 bis 34 Kohlenstoffatomen gebildet, insbesondere Cetyl-, Stearyl-, Arachidyl-, Behenyl- und Lignocerylalkohol, wobei speziell technische $C_{18}$-$C_{22}$-Fettalkoholgemische mit Behenylalkoholgehalten von über 40 % bis über 70 % besonders bevorzugt sind.

In den Acrylaten der Formel II ist $R^1$ wie oben definiert, vorzugsweise Wasserstoff. Die Gruppen $R^3$ und $R^4$ bedeuten Wasserstoff oder $C_1$-$C_4$-Alkylgruppen wie Methyl, Ethyl, n-Propyl, i-Propyl, n-Butyl, s-Butyl und t-Butyl; sie können auch zusammen einen aromatischen oder nicht-aromatischen, gegebenenfalls mit $C_1$-$C_4$-Alkyl der obigen Bedeutungen substituierten $C_5$- oder $C_6$-Ring bilden. Die Gruppe

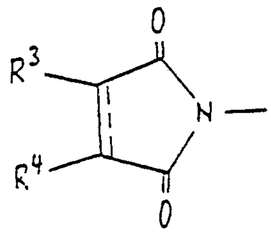

der N-haltigen Olefine gemäß Formel II wie auch derjenigen der Formel III ist bevorzugt aus der von Resten von Phthalimid, Tetrahydro-phthalimid, Methyl-tetrahydrophthalimid, Methyl-hexahydro-phthalimid, Maleinimid und Succinimid gebildeten Gruppe ausgewählt; spezielle Beispiele sind für Phthalsäurederivate neben Phthalimid und Hexahydro-phthalimid 1,2,3,6-Tetrahydro-phthalimid, 4-Methyl-1,2,3,6-tetrahydro-phthalimid und 4-Methylhexahydro-phthalimid.

Die Gruppe $R^5$ in der Formel II stellt eine geradkettige oder verzweigte Alkylengruppe mit 1 bis 12, insbesondere 1 bis 6 Kohlenstoffatomen dar, insbesondere Ethylen, Propylen, Butylen, Pentylen, Hexylen, Octylen, Decylen und Dodecylen; bevorzugt sind die vorgenannten Alkylengruppen mit 1 bis 6 Kohlenstoffatomen. Die Gruppe $R^5$ kann weiterhin Phenylen oder $C_1$-$C_4$-Alkylen-substituiertes Phenylen, insbesondere Methylenphenylen, sein.

N-Acrylate der Formel II werden bevorzugt erhalten, indem man die entsprechenden cyclischen Anhydride der Formel

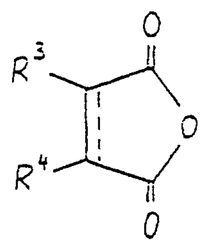

mit Aminoalkoholen der Formel

$H_2N$-$R^5$-OH

umsetzt, insbesondere mit Aminoethanol, omega-Amino-propanol, -butanol, -pentanol, -hexanol, -octanol, -decanol, -dodecanol, 1-Amino-2-propanol, 4-Hydroxyethyl- oder 4-Hydroxymethylanilin, 4-Aminocyclohexanol. Anschließend erfolgt die Umsetzung der freien OH-Gruppe der so erhaltenen Verbindungen mit Acryl- oder Methacrylsäure bzw. reaktiven Derivaten derselben mittels üblicher Methoden.

Weitere bei dieser Reaktion einsetzbare Aminoalkohole sind z.B. 1-Amino-2-hydroxypropan, 2-Amino-1-hydroxypropan, 2-Amino-2′-hydroxy-dieethylether, 2-Amino-2′-hydroxy-diethylamin und 2-Amino-1-hydroxybutan sowie 1-Amino-2,2-dimethyl-3-hydroxypropan.

Eine weitere Methode zur Herstellung N-haltiger Olefine der allgemeinen Formel II besteht darin, daß man von den entsprechenden N-unsubstituierten cyclischen Imiden ausgeht und diese mit Formaldehyd

umsetzt; die erhaltenen N-Hydroxymethylverbindungen lassen sich anschließend mit reaktiven Derivaten der Acrylsäure und Methacrylsäure in üblicher Weise verestern.

In den N-haltigen Olefinen der Formel III, in der $R^1$, $R^3$ und $R^4$ sowie der cyclische Imidrest wie oben definiert sind, bedeutet die Gruppe $R^6$ einen Phenylenrest oder eine Alkylengruppe mit 1 bis 12 Kohlenstoffatomen, mit der Maßgabe, daß der Alkylenrest die Struktur

$R^7$- C H-

aufweist, wobei $R^7$ ein Wasserstoffatom oder ein gegebenenfalls verzweigter Alkylrest mit 1 bis 11 Kohlenstoffatomen ist. Bevorzugt sind hier Verbindungen, in denen der Rest $R^6$ eine Methylengruppe oder eine $C_1$-$C_5$-mono-alkylsubstituierte Methylengruppe ist. Die Bedeutungen des $C_1$-$C_5$-Alkylsubstituenten sind die gleichen wie oben für $C_1$-$C_4$ angegeben, jedoch einschließlich Pentyl.

Die N-haltigen Olefine der Formel III können erhalten werden, indem man die entsprechenden cyclischen Anhydride zunächst mit Aminosäuren der allgemeinen Formel

$H_2N$-$R^6$-COOH

umsetzt. Geeignete Aminosäuren sind Glycin, Alanin, Valin, Leucin, Isoleucin, Phenylalanin, Caprolactam und dergleichen, wobei Glycin bevorzugt ist. Eine weitere geeignete Aminosäure ist 4-Aminobenzoesäure. Die so erhaltenen Imidocarbonsäuren können anschließend in üblicher Weise mit Hydroxy-$C_2$-$C_{10}$-, insbesondere $C_2$-$C_4$-alkylacrylaten und -methacrylaten umgesetzt werden; besonders bevorzugt ist hier die Umsetzung mit den Hydroxyethyl-Derivaten der vorgenannten Acrylsäuren.

In den N-haltigen Olefinen der Formel IV ist $R^9$ eine Phenyl-oder Benzylgruppe, $R^{10}$ eine $C_1$-$C_{16}$-Alkylgruppe, vorzugsweise eine $C_1$-$C_4$-Alkylgruppe und $R^{11}$ eine $C_2$-$C_6$-Alkylengruppe, insbesondere eine $C_2$-$C_4$-Alkylengruppe. Alternativ können $R^9$ und $R^{10}$ auch $C_1$-$C_{16}$-Alkylgruppen, vorzugsweise $C_1$-$C_4$-Alkylgruppen mit den obigen Bedeutungen und $R^{11}$ eine Phenylengruppe sein.

Die N-haltigen Olefine der Formel IV können erhalten werden, indem man Hydroxyalkylamine der Formel

$R^9R^{10}N$-$R^{11}$-OH

mit Acryl- oder Methacrylsäuren, -estern oder reaktiven Derivaten der Säuren in üblicher Weise umsetzt. Als besonders vorteilhafte Hydroxyalkylamine werden hier solche eingesetzt, in denen $R^9$ eine Phenyl- oder Benzylgruppe, $R^{10}$ eine $C_1$-$C_4$-Alkylgruppe und die Hydroxyalkylgruppe 2 bis 4 Kohlenstoffatome aufweist; alternativ können $R^9$ und $R^{10}$ $C_1$-$C_4$-Alkylgruppen sein, wobei an die Stelle der Hydroxyalkylgruppe eine Hydroxyphenylgruppe tritt.

Besonders bevorzugte Vertreter der N-haltigen Olefine der Formel IV sind solche, in denen $R^9$ Benzyl oder Phenyl, $R^{10}$ Methyl oder Ethyl und $R^{11}$ Alkylenreste mit 2 bis 6 Kohlenstoffatomen sind. Sie werden ausgehend von den folgenden Hydroxyalkylaminen erhalten:

N-Benzyl-N-methyl-hydroxy-ethylamin, -propylamin, -butylamin, -pentylamin, -hexylamin, sowie die entsprechenden N-Benzyl-N-ethyl-, N-Phenyl-N-methyl- und N-Phenyl-N-ethyl-N-hydroxyalkylamine.

In den N-haltigen Olefinen der Formel V ist $R^{12}$ eine $C_7$-$C_{33}$-Alkylgruppe, insbesondere eine $C_{15}$-$C_{23}$-Alkylgruppe. Der Rest $R^{12}$-CO ist somit der Rest einer $C_8$-$C_{34}$-, insbesondere $C_{16}$-$C_{24}$-Fettsäure bzw. eines technischen Gemisches derselben natürlichen, z.B. pflanzlichen, tierischen oder seetierischen oder synthetischen Ursprungs. Typische Beispiele für derartige Fettsäuren sind Capryl-, Caprin-, Laurin-, Myristin-, Palmitin-, Stearin-, Arachin-, Behen- und Montansäure, weiterhin Laurolein-, Myristolein-, Palmitolein-, Öl- und Erucasäure. Die N-haltigen Olefine der Formel VI können erhalten werden, indem man die entsprechenden Fettsäuren bzw. Fettsäuregemische mit $C_2$-$C_4$-Alkanolaminen zu den entsprechenden Fettsäurealkanolamiden umsetzt und die Hydroxylfunktion in üblicher Weise mit reaktiven Derivaten der Acryl- oder Methacrylsäure acyliert.

Die Umsetzung der Acrylate der Formel I mit den N-haltigen Olefinen II, III, IV, und V erfolgt in Gegenwart von inerten organischen Lösemitteln wie Xylol, Tetralin und anderen, höher siedenden Lösemitteln, z.B. aromatenreichen Lösemitteln wie Solvesso 200, sowie in Anwesenheit von radikalischen Polymerisationsinitiatoren, die für die Copolymerisation von Acrylaten üblich sind, vgl. Kirk-Othmer, Band 13, 1981, Seite 355 bis 373; ein bevorzugter Initiator ist z.B. Azo-isobutyro-dinitril (AIBN). Üblicherweise erfolgt die Copolymerisation bei Temperaturen von etwa 80 bis 100 °C.

Als weiterhin besonders vorteilhaft haben sich Copolymere der eingangs genannten Art erwiesen, die durch Copolymerisation von Acrylaten der Formel VI

$CH_2 = CH$-CO-$OR^{15}$ (VI)

in der $OR^{15}$ der Rest eines Fettalkohols mit 16 bis 24 Kohlenstoffatomen, insbesondere eines technischen Fettalkoholgemisches, das reich an Behenylalkohol ist (Behenylalkoholgehalt von mehr als 40 bis mehr als 70 %), mit einem N-haltigen Olefin der Formel VII

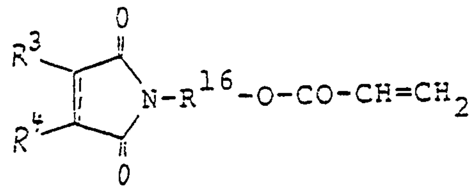

(VII)

in der die Gruppe

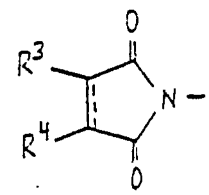

bzw. die Substituenten $R^3$ und $R^4$ wie oben definiert sind und $R^{16}$ ein Alkylenrest mit 2 bis 8, insbesondere 2 bis 3 Kohlenstoffatomen ist, in Molverhältnissen der Verbindungen VI zu VII von 1 : 0,5 bis 1 : 2. Als weiterhin vorteilhaft erwiesen haben sich Copolymere der eingangs genannten Art, die durch Copolymerisation eines Acrylats der Formel VI, in der die Gruppe $OR^{15}$ der Rest eines Fettalkohols mit 16 bis 24 Kohlenstoffatomen ist, insbesondere ein technisches Fettalkoholgemisch, das reich an Behenylalkohol ist (Behenylgehalt von mehr als 40 bis mehr als 70 %), mit einem N-haltigen Olefin der Formel VIII

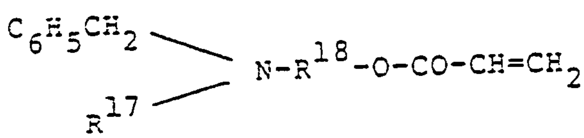

(VIII)

in der $R^{17}$ eine $C_1$-$C_4$-Alkylgruppe und $R^{18}$ eine Ethylengruppe ist, in Molverhältnissen der Verbindungen VI zu VIII von 1 : 0,1 bis 1 : 0,5.

Die Erfindung betrifft weiterhin ein Verfahren zur Herstellung von Copolymeren der eingangs genannten Art, sowie die Verwendung derselben als Fließverbesserer für insbesondere paraffinreiche Rohöle.

Die Herstellung der Copolymerisate der Erfindung wird im folgenden anhand von bevorzugten Ausführungsbeispielen näher erläutert.

1. Herstellung von N-haltigen Olefinen der allgemeinen Formeln II, III, IV, und V (Ausgangsverbindungen für die Copolymerisation = N-haltige Olefine A bis M).

In der nachfolgenden Tabelle 1 sind hergestellte N-haltige olefine A bis H zusammen mit ihren Ausgangsverbindungen und physikalischen Kenndaten zusammengefaßt. Sie wurden ausgehend von den entsprechenden Anhydriden in einer zweistufigen Synthese über die Hydroxyimide nach folgender allgemeiner Arbeitsvorschrift erhalten:

a) Hydroxyimid-Synthese

Zu 1 mol des jeweiligen Anhydrids in 400 ml Xylol wurde 1 mol des Aminoalkohols langsam zugetropft, wobei sich das Gemisch erwärmte. Nach Ende der Zugabe wurde auf 170 °C erhitzt und das Reaktionswasser azeotrop am Wasserabscheider abdestilliert. Nach ca. 3 Stunden war die Wasserabspaltung beendet. Das Produkt konnte durch Entfernung des Lösemittels isoliert oder direkt in Lösung weiter umgesetzt werden.

Tabelle 1.

| N-haltige Olefine aus Anhydriden, Aminoalkoholen und Acrylsäure | | | | | | | | |
|---|---|---|---|---|---|---|---|---|
| Anhydrid | Hydroxyimid-Synthese | | | | Unsetzung, mit Acrylsäure | | | |
| | Aminoalkohol | Ausbeute % | Smp. °C | OHZ | Produkt | Ausbeute | Smp. | N-Olefin |
| Phthalsäureanhydrid | 2-Aminoethanol | 98 | 127 | - | (Phthalimido-N-ethyl)-acrylat | 92 | 105 | A |
| Tetrahydrophthalsäureanhydrid | dto. | 100 | 70 | - | (Tetrahydrophthalimido-(-N-ethyl)-acrylat | 89 | flüssig | B |
| 4-Methylhexahydrophthalsäureanhydrid | dto. | 98 | - | 259 | (4-Methylhexahydrophthalimido-N-ethyl) acrylat | 91 | flüssig | C |
| Bernsteinsäureanhydrid | dto. | 97 | 60 | | (Succimido-N-ethyl)-acrylat | 50 | | D |
| Phthalsäureanhydrid | 1-Aminopropanol-2 | 97 | 88 | | (Phthalimido-N-isopropyl-)-acrylat | 85 | 65 | E |
| dto. | 2-(4-Aminophenyl)-ethanol | 94 | | 201 | [Phthalimido-N-(4-ethylphenyl)]-acrylat | 89 | 105 | F |
| 4-Methylhexahydrophthalsäureanhydrid | 6-Aminohexanol-(1) | 100 | | 201,5 | (4-Methylhexahydrophthalimido-N-hexyl)-acrylat | 90 | flüssig | G |
| Bernsteinsäureanhydrid | dto. | 96 | | 252 | (Succinimido-N-hexyl)-acrylat | 74 | | H |

berechnet nach aufgefangenem Reaktionswasser
OHZ - Hydroxylzahl in mg KOH.g Substanz

b) Umsetzung der oben erhaltenen Hydroxyimide mit Acrylsäure zu den N-haltigen Olefinen A bis H.

1 mol des jeweiligen Hydroxyimids wurde mit 1 mol Acrylsäure in 200 ml Xylol unter Zugabe von 1 g Hydrochinonmonomethylether und 1 g konzentrierter Schwefelsäure am Wasserabscheider auf ca. 140 bis 150 °C erhitzt, bis annähernd die theoretische Wassermenge abgespalten war. Das Produkt konnte direkt zur Polymerisation eingesetzt oder nach dem Waschen mit Wasser und Hydrogencarbonatlösung sowie Entfernung des Xylols isoliert werden.

2. Herstellung weiterer N-haltiger Olefine I, J, K, L und M.

(Phthalimido-N-methyl)acrylat (I).

100 g Phthalimid (0,68 mol) wurden mit 88 ml 37 %-iger Formaldehydlösung und 190 ml destilliertem Wasser versetzt und 4 Stunden bei 98 °C gerührt. Die leicht trübe Lösung wurde heiß filtriert. Beim Abkühlen fiel das Zwischenprodukt, (N-Hydroxymethyl)-phthalimid als weißer, kristalliner Feststoff aus. Smp. 104 °C.

Zur Herstellung der Titelverbindung wurden 1 mol (N-Hydroxymethyl)-phthalimid und 1 mol Acrylsäure in 600 ml Xylol gegeben und nach Zusatz von 1 g Hydrochinonmonomethylether und 1 g konzentrierter Schwefelsäure bei ca. 140 °C verestert, bis kein Reaktionswasser mehr entstand.

Das nach Entfernung des Lösemittels zurückbleibende Produkt wies einen Smp. von 115 °C auf.

Phthalimido-N-(methylcarboxyethyl)-acrylat (J).

N-(Phthaloylglycin):

1 mol Phthalsäureanhydrid, 1 mol Glycin und 0,1 mol Triethylamin wurden in 200 ml Toluol am Wasserabscheider auf ca. 110 bis 130 °C erhitzt. Dabei spalteten sich innerhalb von 3 Stunden ca. 95 % der theoretischen Wassermenge ab. Das Lösemittel wurde bei maximal 140 °C im Vakuum entfernt. Der feste Rückstand wurde in 300 ml 0,5 n HCl aufgeschlämmt, abgesaugt, mehrmals mit Wasser gewaschen und getrocknet. Man erhielt ein weißes Produkt, Smp. 190 °C.

Umsetzung von N-Phthaloylglycin zum N-haltigen Olefin J.

41,0 g (0,2 mol) N-Phthaloylglycin und 69,6 g (0,6 mol) Hydroxyethylacrylat wurden in 200 ml Toluol unter Zugabe von 0,6 g Hydrochinonmonomethylether und 0,6 g konzentrierter Schwefelsäure am Wasserabscheider erhitzt; die Innentemperatur betrug 110 bis 130 °C. Nach Abspaltung von 3,5 Wasser (theor. 3,6 g), was einem Umsatz von ca. 97 % entspricht, wurde die Reaktion abgebrochen (nach ca. 3,5 Stunden). Nach Verdünnen mit weiteren 200 ml Toluol wurde das überschüssige Hydroxyethylacrylat durch Waschen mit Wasser entfernt. Das Reaktionsgemisch wurde anschließend mit Hydrogencarbonat entsäuert und das Lösemittel entfernt, wobei das Produkt als gelbliches Öl anfiel (OH-Zahl 0, Restsäurezahl = 8 (jeweils mg KOH/g Substanz).

Phthalimido-N-(methylcarboxypropyl)-methacrylat (K).

1 mol Phthaloylglycin und 1 mol Hydroxypropylmethacrylat wurden in 400 ml Toluol nach Zusatz von 1 g Hydrochinonmonomethylether und 1 g konzentrierter Schwefelsäure am Wasser abscheider erhitzt, bis annähernd die theoretische Wassermenge abgespalten war. Die Toluollösung wurde mit Wasser gewaschen; das Toluol wurde im Vakuum abgezogen.

$C_{16/18}$-Fettsäureamido-ethylacrylat (L).

$C_{16/18}$-Fettsäuremonoethanolamid.

0,5 mol $C_{16/18}$-Fettsäuremethylester und 1 mol 2-(Methylamino)-ethanol wurden vermischt, mit 1 % Zinnpulver versetzt und 6 Stunden auf 150 °C erhitzt. Dabei wurden ca. 80 % der theoretischen Methanolmenge abgespalten. Anschließend wurde die Badtemperatur auf 200 °C erhöht und 30 Minuten Vakuum angelegt, um restliches Methanol sowie überschüssigen Aminoalkohol zu entfernen. Man erhielt ein Produkt mit einem Schmelzpunkt von 40 °C.

$C_{16/18}$-Fettsäureamidoethylacrylat:

1 mol Acrylsäure und 1 mol des zuvor hergestellten $C_{16/18}$-Fettsäuremonoethanolamids wurden zusammen mit 1 g Hydrochinonmonomethylether und 1 g konzentrierter Schwefelsäure in 300 ml Toluol gegeben und ca. 12 Stunden bei 140 °C verestert. Anschließend wurde die Lösung filtriert und das Toluol im Vakuum abgezogen. Das erhaltenen Produkt wies eine Rest-OH-Zahl von 15 und eine Restsäurezahl von 11 auf.

Herstellung von N-Benzyl-N-methylaminoethylacrylat (M).

247,9 g (1,5 mol) N-Benzyl-N-methylethanolamin (handelsüblich) und 126,0 g (1,75 mol) Acrylsäure wurden in 300 ml Xylol unter Zugabe von 1,5 g Hydrochinonmonomethylether und 1,5 g konzentrierter Schwefelsäure am Wasserabscheider erhitzt. Nach 6 Stunden hatten sich 27 g Wasser abgespalten, was einer quantitativen Umsetzung entsprach. Gegen Ende der Reaktion wurde die Innentemperatur durch Xylolentnahme bis auf 170 °C gesteigert. Nach üblicher Aufarbeitung resultierte ein gelbbraunes, dünnflüssiges Öl mit einer OH-Zahl von 6,5 und einer Säurezahl von 9 mg KOH/g.

3. Herstellung der Copolymerisate der Erfindung.

Die herstellten Copolymerisate der Erfindung sind in den nachfolgenden Tabellen 2 bis 9 zusammengefaßt.

Die genannten Tabellen enthalten weiterhin in der Spalte "Pour-Point" die mit einem Zusatz von 400 ppm. der Copolymerisate der Erfindung erzielbaren Fließpunkte eines Rohölgemisches, das ohne jeden fließverbessernden Zusatz einen Fließpunkt von +21 °C aufwies.

Beispiel 1.

Copolymeres aus (Phthalimido-N-ethyl)acrylat (N-haltiges Olefin A) und Behenylacrylat (ca. 70 % $C_{22}$-Gehalt).

24,5 g (0,1 mol) (Phthalimido-N-ethyl)acrylat und 37,5 g (0,1 mol) Behenylacrylat wurden in 37,5 g Xylol auf 80 °C erhitzt. Anschließend wurden innerhalb einer Stunde 0,46 g (2,8 x $10^{-3}$ mol) Azo-bis-isobutyronitril (AIBN) in 24,5 g Xylol zugegeben. Daran schloß sich eine Nachreaktionszeit von 2 Stunden bei 100 °C an.

Beispiele 2 bis 20, 27 bis 41, 44, 47 bis 50, 52.

Die Herstellung dieser Copolymere erfolgt analog zu der in Beispiel 1 angegebenen Arbeitsweise.

Beispiele 21 bis 26, 42, 43, 45, 46, 51 und 53.

Die Herstellung der Copolymerisate der Erfindung gemäß diesen Beispielen wird im folgenden anhand

derjenigen für das Beispiel 24, zu der sie analog ist, erläutert:

Herstellung des (Phthalimido-N-ethyl)-acrylat-behenylacrylat-Polymeren (Monomeren-Zulaufverfahren).

Eine Lösung von 2,45 g (0,01 mol) (Phthalimido-N-ethyl)-acrylat und 3,75 g (0,01 mol) Behenylacrylat in 3,75 g Xylol (= 10 % der Monomerenmischung wurden innerhalb von 6 Minuten bei 80° C mit 0,046 AIBN in 2,45 g Xylol (= 10 % der Starterlösung) versetzt.

Innerhalb von 54 Minuten wurden anschließend bei gleicher Temperatur eine 80° C heiße Lösung von 22,5 g (0,09 mol) (Phthalimido-N-ethyl)-acrylat und 33,75 g (0,09 mol) Behenylacrylat in 33,75 g Xylol und eine Lösung von 0,414 g AIBN in 22,05 g Xylol synchron zudosiert. Daran schloß sich eine Nachreaktionszeit von 2 Stunden bei 100° C an.

Der Herstellung der übrigen nach dem Monomeren-Zulaufverfahren synthetisierten Copolymeren erfolgt analog unter Einsatz der jeweils in den Tabellen angegebenen Molverhältnisse.

Tabelle 2

| Copolymerisate in Xylol bei 80° C, Eintopfverfahren; Starter AIBN zudosiert. | | | | | | |
|---|---|---|---|---|---|---|
| Beispiel | Monomere | | | | Copolymerisat | |
| | N-haltiges Olefin | mol | Fettalkohol-Acrylat | mol | Spezifische Viskosität 10 %-ig in Xylol, 25° C | Pour-Point [° C] |
| 1 | A | 1 | Behenylacrylat (~70 % $C_{22}$) | 1 | 2,68 | -12 |
| 2 | E | 1 | dto. | 1 | 0,84 | -12 |
| 3 | C | 1 | dto. | 1 | 0,83 | -6 |
| 4 | G | 1 | dto. | 1 | 0,90 | -9 |
| 5 | D | 1 | dto. | 1 | 0,91 | -9 bis -12 |
| 6 | H | 1 | dto. | 1 | 0,76 | -12 |
| 7 | B | 1 | dto. | 1 | 1,03 | -6 |
| 8 | I | 1 | dto. | 1 | 1,04 | -9 |
| 9 | F | 1 | dto. | 1 | 1,06 | -3 bis -6 |

Tabelle 3

| Copolymerisate in Xylol bei 80° C, Eintopfverfahren, Starter AIBN zudosiert. | | | | | | |
|---|---|---|---|---|---|---|
| Beispiel | Monomere | | | | Copolymerisat | |
| | N-haltiges Olefin | mol | Fettalkohol-Acrylat | mol | Spezifische Viskosität 10 %-ig in Xylol, 25° C | Pour-Point [° C] |
| 10 | I | 0,1 | Behenylacrylat (~70 % $C_{22}$) | 1 | 1,04 | -12 bis -15 |
| 11 | K | 0,1 | dto. | 1 | 1,03 | -15 |

Tabelle 4

| Copolymerisation in Xylol bei 80 °C, Eintopfverfahren, Starter AIBN zudosiert. | | | | | | |
|---|---|---|---|---|---|---|
| Beispiel | Monomere | | | | Copolymerisat | |
| | N-haltiges Olefin | mol | Fettalkohol-Acrylat | mol | Spezifische Viskosität 10 %-ig in Xylol, 25 °C | Pour-Point [°C] |
| 12 | L | 1 | Behenylacrylat (~45 % $C_{22}$) | 1 | 0,62 | -3 |
| 13 | L | 1 | dto. | 0,5 | 0,54 | +3 |
| 14 | M | 0,1 | dto. | 1 | 1,83 | -9 bis -12 |

Tabelle 5

| Copolymerisate in Xylol bei 80 °C, Eintopfverfahren, Starter AIBN zudosiert. | | | | | | |
|---|---|---|---|---|---|---|
| Beispiel | Monomere | | | | Copolymerisat | |
| | N-haltiges Olefin | mol | Fettalkohol-Acrylat | mol | Spezifische Viskosität 10 %-ig in Xylol, 25 °C | Pour-Point [°C] |
| 15 | A | 0,1 | Behenylacrylat (~70 % $C_{22}$) | 1 | 2,95 | -9 |
| 16 | A | 0,33 | dto. | 1 | 2,23 | -12 |
| 17 | A | 0,66 | dto. | 1 | 4,02 | -15 |
| 18 | A | 1,0 | dto. | 1 | 2,68 | -12 |
| 19 | A | 1,5 | dto. | 1 | 2,62 | -6 |
| 20 | A | 3,0 | dto. | 1 | 1,75 | +18 |

Tabelle 6

| Copolymerisation in Xylol bei 80 °C, Monomerenzulaufverfahren, Starter AIBN zudosiert. | | | | | | |
|---|---|---|---|---|---|---|
| Beispiel | Monomere | | | | Copolymerisat | |
| | N-haltiges Olefin | mol | Fettalkohol-Acrylat | mol | Spezifische Viskosität 10 %-ig in Xylol, 25 °C | Pour-Point [°C] |
| 21 | A | 0,1 | Behenylacrylat (70 % $C_{22}$) | 1 | 1,72 | -12 |
| 22 | A | 0,33 | dto. | 1 | 1,50 | -12 |
| 23 | A | 0,66 | dto. | 1 | 1,47 | -12 |
| 24 | A | 1,0 | dto. | 1 | 1,22 | -9 |
| 25 | A | 1,5 | dto. | 1 | 1,18 | +3 |
| 26 | A | 3,0 | dto. | 1 | 1,06 | +18 |

Tabelle 7

| Copolymerisation in Xylol bei 80 °C, Eintopfverfahren, Starter AIBN zudosiert. | | | | | | |
|---|---|---|---|---|---|---|
| Beispiel | Monomere | | | | Copolymerisat | |
| | N-haltiges Olefin | mol | Fettalkohol-Acrylat | mol | Spezifische Viskosität 10 %-ig in Xylol, 25 °C | Pour-Point [°C] |
| 27 | A | 0,33 | Behenylacrylat (~45 % $C_{22}$) | 1 | 2,49 | -15 |
| 28 | A | 0,66 | dto. | 1 | 2,45 | -15 |
| 29 | A | 1,0 | dto. | 1 | 1,84 | -12 |
| 30 | A | 0,33 | Behenylacrylat (~70 % $C_{22}$) | 1 | 2,23 | -12 |
| 31 | A | 0,66 | dto. | 1 | 4,02 | -15 |
| 32 | A | 1,0 | dto. | 1 | 2,68 | -12 |
| 33 | A | 1,0 | dto. | 1 | 2,21 [1)] | -3 bis -6 |
| 34 | A | 1,0 | dto. | 1 | 2,81 [2)] | -6 |
| 35 | A | 1,0 | dto. | 1 | 1,70 [3)] | +6 |
| 36 | A | 1,0 | Behenylmethacrylat (~70 % $C_{22}$) | 1 | 4,21 | +9 bis +12 |
| 37 | A | 1,0 | Behenylacrylat (~98 % $C_{22}$) | 1 | 2,08 | -3 |

1, 2, 3) Regler tert.-Dodecylmercaptan:
1) $2 \cdot 10^{-4}$ mol/mol Doppelbindungen
2) $1 \cdot 10^{-3}$ mol/mol "
3) $5 \cdot 10^{-3}$ mol/mol "

Tabelle 8

| Copolymerisation, Variatonen | | | | | | | | | |
|---|---|---|---|---|---|---|---|---|---|
| Beispiel | **Monomere** | **Copolymerisation** | | | | | **Copolymerisation** | | |
| | N-haltiges Olefin/Fettalkohol-Acrylat (1:1 mol) | Lösemittel | Starter AIBN | | Verfahren | | Umsatz [° C} | Spezifische Viskosität 10 %-ig in Xylol. 25° C | Pour-Point [° C] |
| | | | mol/mol Doppelbindungen | Temperatur der Zugabe [° C] | 4) | 5) | | | |
| 38 | A Behenylacrylat (~70 % $C_{22}$) | Xylol | 0,014 | 80 | x | | 88 | 2,68 | -12 |
| 39 | dto. | dto. | 0,005 | 80 | x | | 79 | 1,34 | -9 |
| 40 | dto. | dto. | 0,025 | 80 | x | | 91 | 2,62 | -12 bis -15 |
| 41 | dto. | dto. | 0,014 | 100 | x | | 84 | 1,77 | -12 bis -15 |
| 42 | dto. | dto. | 0,014 | 80 | | x | 80 | 1,22 | -9 |
| 43 | dto. | dto. | 0,014 | 80 | | x | 87 | 1,54 | -12 bis -15 |
| 44 | dto. | dto. | 0,014 | 90 | x | | 87 | 1,56 | -15 |
| 45 | dto. | Tetralin | 0,014 | 80 | | x | 58 | 0,70 | +6 |
| 46 | dto. | Solvesso 200 | 0,014 | 80 | | x | 84 | 1,45 | -12 bis -15 |

Standardmenge
Zutropfzeit vervierfacht
Zutropfzeit verachtfacht
Eintopfverfahren
Monomerenzulaufverfahren

Tabelle 9

| Copolymerisation in Xylol bei 80 °C, Eintopfverfahren, Starter AIBN zudosiert. | | | | | | |
|---|---|---|---|---|---|---|
| Beispiel | Monomere | | | | Copolymerisat | |
| | N-haltiges Olefin | mol | Fettalkohol-Acrylat | mol | Spezifische Viskosität 10 %-ig in Xylol, 25 °C | Pour-Point [25 °C] |
| 47 | M | 1,00 | Behenylacrylat (~45 % $C_{22}$) | 1 | 0,72 | +12 |
| 48 | M | 0,66 | dto. | 1 | 0,86 | +9 |
| 49 | M | 0,33 | dto. | 1 | 1,04 | -12 bis -15 |
| 50 | M | 0,15 | dto. | 1 | 1,51 | -15 |
| 51 | M | 0,15 | dto. | 1 | 1,18[1)] | -6 |
| 52 | M | 0,15 | Behenylacrylat | 1 | 1,72 | -15 |
| 53 | M | 0,15 | dto. | 1 | 1,39[1)] | -15 |

1) Monomerenzulaufverfahren

Die Tabelle 10 enthält Testergebnisse mit den Verbindungen der Erfindung und einem Vergleichsprodukt an praxisrelevanten Rohölen.

Tabelle 10

| Tests an praxisrelevanten Rohölen. | | | | | |
|---|---|---|---|---|---|
| Copolymerisat | Pour-Point diverser Rohöltypen | | | | |
| Beispiel Nr. (Zusatz jeweils (400 ppm) | PC 16* | PC 18* | Trockenöl 5* | La Paz ** | La Conception ** |
| 18 | -3 | <-18 | <-14 | +3 | +6 |
| 50 | +3 | <-18 | <-14 | <-20 | <-20 |
| Vergleichsprodukt | -3 | <-18 | <-14 | -9 | <-20 |
| ohne Zusatz | +18 | +15 | +15 | +3 | +9 |

* Kanada
** Venezuela

## Ansprüche

1. Copolymere von langkettigen Alkylacrylaten mit N-haltigen Olefinen, erhältlich durch Copolymerisation von
a) Acrylaten der Formel I
$CH_2=CR^1-CO-OR^2$ (I)
in der $R^1$ ein Wasserstoffatom oder eine Methylgruppe und
$OR^2$ der Rest eines Fettalkohols mit 16 bis 34 Kohlenstoffatomen bedeuten, mit
N-haltigen Olefinen
b$_1$) der Formel II

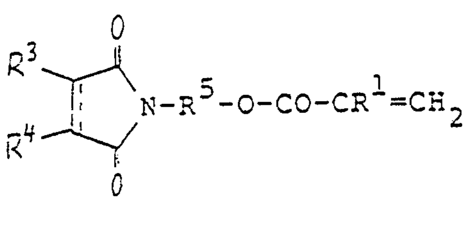

(II)

in der $R^3$ und/oder $R^4$ Wasserstoff oder $C_1$-$C_4$-Alkylgrup pen sind oder zusammen einen gegebenenfalls aromatischen und gegebenenfalls mit $C_1$-$C_4$-Alkyl-substituierten $C_5$- oder $C_6$-Ring bilden können,
$R^5$ eine geradkettige oder verzweigte Alkylengruppe mit 1 bis 12 Kohlenstoffatomen, die das Strukturelement
$-CH_2-CH_2-O-CH_2-CH_2-$ bzw.
$-CH_2-CH_2-NH-CH_2-CH_2-$
oder eine cyclische $C_5$- oder $C_6$-Alkylengrupe aufweisen kann oder eine gegebenenfalls $C_1$-$C_4$-Alkylen-substituierte Phenylengruppe ist,
und $R^1$ wie oben definiert ist, wobei die Bindung

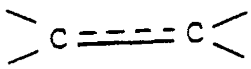

hydriert sein kann,
und/oder
$b_2$) der Formel III

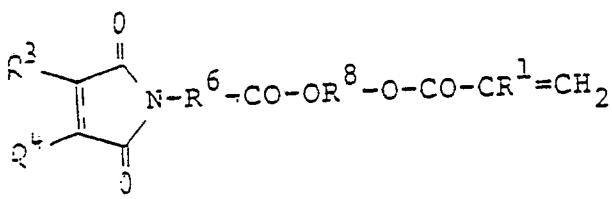
(III)

in der
$R^1$, $R^3$ und $R^4$ wie oben definiert sind,
$R^6$ einen Phenylenrest oder eine Alkylengruppe der Formel
$R^7$- CH-
in der $R^7$ ein Wasserstoffatom oder ein gegebenenfalls verzweigter Alkylrest mit 1 bis 11 Kohlenstoffatomen ist, und
$R^8$ eine $C_2$-$C_{10}$-Alkylengruppe sowie die Bindung

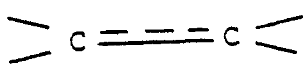

hydriert sein kann,
bedeuten,
und/oder
$b_3$) der Formel IV

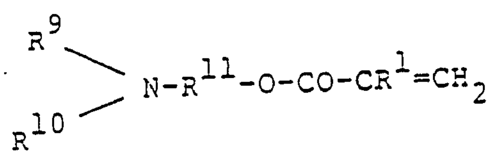
(IV)

in der
$R^1$ wie oben definiert ist, $R^8$ eine Phenyl- oder Benzylgruppe, $R^{10}$ eine $C_1$-$C_{16}$-Alkylgruppe und $R^{11}$ eine $C_2$-$C_6$-Alkylengruppe,
oder
$R^9$ und $R^{10}$ $C_1$-$C_{16}$-Alkylgruppen und $R^{11}$ eine Phenylengruppe
bedeuten,
und/oder

$b_4$) der Formel V

$R^{12}$-CO-NH-$R^{13}$-O-CO-$CR^1 = CH_2$ (V)

in der $R^{12}$ eine $C_7$-$C_{33}$-, insbesondere $C_{15}$-$C_{23}$-Alkylgruppe und $R^{13}$ eine $C_2$-$C_4$-Alkylengruppe bedeuten und $R^1$ wie oben definiert ist,
in Molverhältnissen von I, II, III, IV bzw. V von 1 : 0,1 bis 1 : 10, in Anwesenheit von inerten organischen Lösemitteln und radikalischen Polymerisationsinitiatoren.

2. Copolymere nach Anspruch 1, erhältlich durch eine Copolymerisation von Acrylaten der Formel I, in der $R^1$ Wasserstoff und $R^2$ der Rest eines Fettalkohols mit 16 bis 24 Kohlenstoffatomen ist.

3. Copolymere nach Anspruch 1 oder 2, dadurch gekennzeichnet, daß die Gruppe

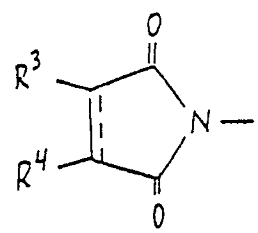

der N-haltigen Olefine gemäß Formel II oder III aus der von Resten von Phthalimid, Methyl-tetrahydrophthalimid, Methylhexahydrophthalimid, Maleinimid und Succinimid gebildeten Gruppe ausgewählt ist.

4. Copolymere nach Anspruch 1 oder 2, dadurch gekennzeichnet, daß die Gruppe $R^5$ der N-haltigen Olefine gemäß Formel II eine geradkettige oder verzweigte Alkylengruppe mit 1 bis 6 Kohlenstoffatomen ist.

5. Copolymere nach Anspruch 1 oder 2, dadurch gekennzeichnet, daß die Gruppe $R^6$ der N-haltigen Olefine gemäß Formel III eine Methylengruppe oder eine $C_1$-$C_5$-monoalkyl-substituierte Ethylengruppe ist.

6. Copolymere nach Anspruch 1 oder 2, dadurch gekennzeichnet, daß die Gruppe $R^8$ der N-haltigen Olefine gemäß Formel III eine $C_2$-$C_4$-Alkylengruppe ist.

7. Copolymere nach Anspruch 1 oder 2, dadurch gekennzeichnet, daß in den N-haltigen Olefinen gemäß Formel IV $R^9$ eine Phenyl- oder Benzylgruppe, $R^{10}$ eine $C_1$-$C_4$-Alkylgruppe und $R^{11}$ eine $C_2$-$C_6$-Alkylengruppe ist.

8. Copolymere nach Anspruch 1 oder 2, dadurch gekennzeichnet, daß in den N-haltigen Olefinen gemäß Formel IV $R^9$ und $R^{10}$ $C_1$-$C_4$-Alkylgruppen und $R^{11}$ eine Phenylengruppe sind.

9. Copolymere nach Anspruch 1 oder 2, dadurch gekennzeichnet, daß in den N-haltigen Olefinen gemäß Formel V $R^{12}$ eine $C_{15}$-$C_{23}$-Alkylgruppe ist.

10. Copolymere nach Anspruch 1 oder 2, erhältlich durch Copolymerisation von Acrylaten der Formel VI

$CH_2 = CH$-CO-$OR^{14}$ (VI)

in der $OR^{14}$ der Rest eines Fettalkohols mit 16 bis 24 Kohlenstoffatomen ist, mit einem N-haltigen Olefin der Formel VII

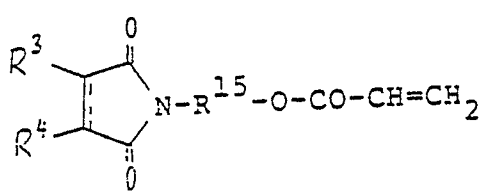

(VII)

in der die Gruppe

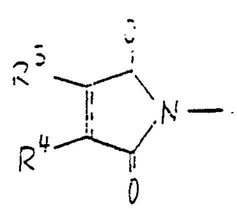

bzw. die Substituenten $R^3$ und $R^4$ wie oben definiert sind und $R^{15}$ ein Alkylenrest mit 2 bis 8, insbesondere 2 bis 3 Kohlenstoffatomen ist,

in Molverhältnissen der Verbindungen VI zu VII von 1 : 0,5 bis 1 : 2.

11. Copolymere nach Anspruch 1 oder 2, erhältlich durch Copolymerisation eines Acrylats der Formel VI gemäß Anspruch 10, in der $OR^{14}$ der Rest eines Fettalkohols mit 16 bis 24 Kohlenstoffatomen ist, mit einem N-haltigen Olefin der Formel VIII

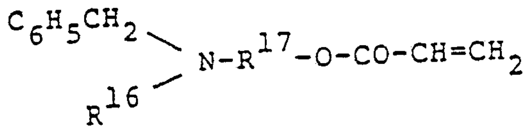

(VIII)

in der $R^{16}$ eine $C_1$-$C_4$-Alkylgruppe und $R^{17}$ eine Ethylengruppe ist, in Molverhältnissen der Verbindungen VI zu VIII von 1 : 0,1 bis 1 : 0,5.

12. Verfahren zur Herstellung von Copolymeren von langkettigen Alkylacrylaten von N-haltigen Polyolefinen, gekennzeichnet durch eine Copolymerisation von

a) Acrylaten der Formel I

$CH_2=CR^1$-CO-$OR^2$ (I)

in der $R^1$ ein Wasserstoffatom oder eine Methylgruppe und

$OR^2$ der Rest eines Fettalkohols mit 16 bis 34 Kohlenstoffatomen bedeuten, mit

N-haltigen Olefinen

$b_1$) der Formel II

N-$R^5$-O-CO-$CR^1=CH_2$ (II)

in der $R^3$ und/oder $R^4$ Wasserstoff oder $C_1$-$C_4$-Alkylgruppen sind oder zusammen einen gegebenenfalls aromatischen und gegebenenfalls mit $C_1$-$C_4$-Alkyl-substituierten $C_5$- oder $C_6$-Ring bilden können,

$R^5$ eine geradkettige oder verzweigte Alkylengruppe mit 1 bis 12 Kohlenstoffatomen, die das Strukturelement $-CH_2-CH_2-O-CH_2-CH_2-$ bzw. $-CH_2-CH_2-NH-CH_2-CH_2-$ (sofern 4 oder mehr als 4 Kohlenstoffatome vorhanden sind) oder eine cyclische $C_5$- oder $C_6$-Alkylengruppe aufweisen kann oder eine gegebenenfalls $C_1$-$C_4$-Alkylen-substituierte Phenylengruppe ist,

und $R^1$ wie oben definiert ist, wobei die Bindung

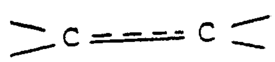

hydriert sein kann,

und/oder

$b_2$) der Formel III

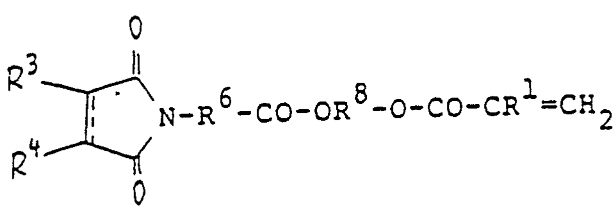

(III)

in der

$R^1$, $R^3$ und $R^4$ wie oben definiert sind,

$R^6$ einen Phenylenrest oder eine Alkylengruppe der Formel

$R^7$-CH-

in der $R^7$ ein Wasserstoffatom oder ein gegebenenfalls verzweigter Alkylrest mit 1 bis 11 Kohlenstoffatomen ist, und

$R^8$ eine $C_2$-$C_{10}$-Alkylengruppe sowie die Bindung

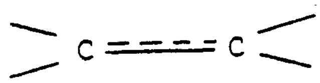

hydriert sein kann,
bedeuten,
und/oder
$b_3$) der Formel IV

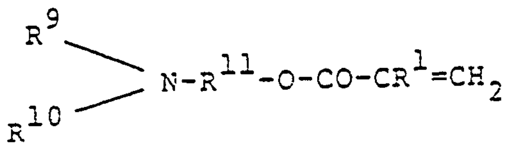

(IV)

in der
$R^1$ wie oben definiert ist, $R^9$ eine Phenyl- oder Benzylgruppe, $R^{10}$ eine $C_1$-$C_{16}$-Alkylgruppe und $R^{11}$ eine $C_2$-$C_6$-Alkylengruppe,
oder
$R^9$ und $R^{10}$ $C_1$-$C_{16}$-Alkylgruppen und $R^{11}$ eine Phenylengruppe
bedeuten,
und/oder
$b_4$) der Formel V
$R^{12}$-CO-NH-$R^{13}$-O-CO-$CR^1$ = $CH_2$ (V)
in der $R^{12}$ eine $C_7$-$C_{33}$-, insbesondere $C_{15}$-$C_{23}$-Alkylgruppe und $R^{13}$ eine $C_2$-$C_4$-Alkylengruppe bedeuten und $R^1$ wie oben definiert ist,
in Molverhältnissen von I zu II, III, IV bzw. V von 1 : 0,1 bis 1 : 10, in Anwesenheit von inerten organischen Lösemitteln und radikalischen Polymerisationsinitiatoren.

13. Verfahren nach Anspruch 12, erhältlich durch eine Copolymerisation von Acrylaten der Formel I, in der $R^1$ wie oben definiert, vorzugsweise Wasserstoff ist und $R^2$ eines Fettalkohols mit 16 bis 24 Kohlenstoffatomen ist.

14. Verfahren nach Anspruch 12 oder 13, dadurch gekennzeichnet, daß man N-haltige Olefine gemäß den Formeln II oder III verwendet, bei denen die Gruppe

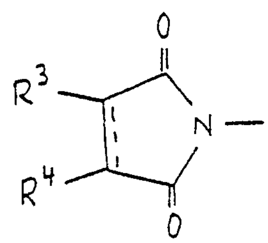

der N-haltigen Olefine gemäß Formel II oder III aus der von Resten von Phthalimid, Methyl-tetrahydrophthalimid, Methylhexahydrophthalimid, Maleinimid und Succinimid gebildeten Gruppe ausgewählt ist.

15. Verfahren nach Anspruch 12 oder 13, dadurch gekennzeichnet, daß man N-haltige Olefine gemäß der Formel II verwendet, in der die Gruppe $R^5$ eine geradkettige oder verzweigte Alkylengruppe mit 1 bis 6 Kohlenstoffatomen ist.

16. Verfahren nach Anspruch 12 oder 13, dadurch gekennzeichnet, daß man N-haltige Olefine gemäß der Formel III verwendet, in der die Gruppe $R^6$ eine Methylengruppe oder eine $C_1$-$C_5$-mono-alkylsubstituierte Methylengruppe ist.

17. Verfahren nach Anspruch 12 oder 13, dadurch gekennzeichnet, daß man N-haltige Olefine gemäß der Formel III verwendet, in der die Gruppe $R^8$ eine $C_2$-$C_4$-Alkylengruppe ist.

18. Verfahren nach Anspruch 12 oder 13, dadurch gekennzeichnet, daß man N-haltige Olefine gemäß der Formel IV verwendet, in der $R^9$ eine Phenyl- oder Benzylgruppe, $R^{10}$ eine $C_1$-$C_4$-Alkylgruppe und $R^{11}$ eine $C_2$-$C_6$-Alkylengruppe ist.

19. Verfahren nach Anspruch 12 oder 13, dadurch gekennzeichnet, daß man N-haltige Olefine der Formel IV verwendet, in der $R^9$ und $R^{10}$ $C_1$-$C_4$-Alkylgruppen und $R^{11}$ eine Phenylen gruppe sind.

20. Verfahren nach Anspruch 12 oder 13, dadurch gekennzeichnet, daß man N-haltige Olefine der Formel V verwendet, in der $R^{12}$ eine $C_{15}$-$C_{23}$-Alkylgruppe ist.

21. Verfahren nach Anspruch 12 oder 13, gekennzeichnet durch eine Copolymerisation von Acrylaten der Formel VI

$CH_2 = CH\text{-}CO\text{-}OR^{14}$ (VI)

in der $OR^{14}$ der Rest eines Fettalkohols mit 16 bis 24 Kohlenstoffatomen ist, mit einem N-haltigen Olefin der Formel VII

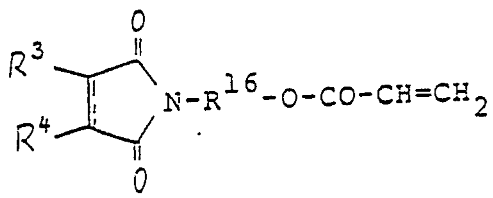

(VII)

in der die Gruppe

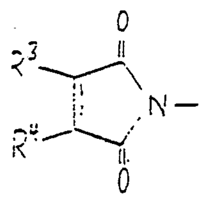

bzw. die Substituenten $R^3$ und $R^4$ wie oben definiert sind und $R^{15}$ ein Alkylenrest mit 2 bis 8, insbesondere 2 bis 3 Kohlenstoffatomen ist,
in Molverhältnissen der Verbindungen VI zu VII von 1 : 0,5 bis 1 : 2.

22. Verfahren nach Anspruch 12, gekennzeichnet durch eine Copolymerisation eines Acrylats der Formel VI gemäß Anspruch 21, in der $OR^{15}$ der Rest eines Fettalkohols mit 16 bis 24 Kohlenstoffatomen ist, mit einem N-haltigen Olefin der Formel VIII

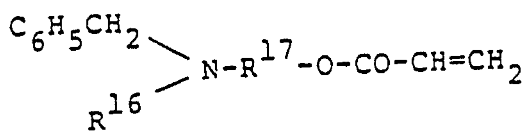

(VIII)

in der $R^{16}$ eine $C_1$-$C_4$-Alkylgruppe und $R^{17}$ eine Ethylengruppe ist, in Molverhältnissen der Verbindungen VI zu VIII von 1 : 0,1 bis 1 : 0,5.

23. Verwendung der Copolymere nach einem der Ansprüche 1 bis 11 als Fließverbesserer für Rohöle.

Europäisches Patentamt

# EUROPÄISCHER RECHERCHENBERICHT

Nummer der Anmeldung

EP 89 10 4408

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-E- 30 238 (E.H. SPECHT et al.)<br>* Anspruch 1 *<br>--- | 1 | C 08 F 220/18<br>C 08 F 220/34<br>C 08 F 220/36<br>C 10 L 1/22 |
| A,P | DE-A-3 711 344 (BAYER AG)<br>* Anspruch 1 *<br>----- | 1 | |
| | | | **RECHERCHIERTE SACHGEBIETE (Int. Cl.4)** |
| | | | C 08 F<br>C 10 L |

Der vorliegende Recherchenbericht wurde für alle Patentansprüche erstellt

| Recherchenort | Abschlußdatum der Recherche | Prüfer |
|---|---|---|
| DEN HAAG | 09-06-1989 | GLIKMAN J-F.M. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)